# EUROPEAN PATENT APPLICATION

(11) **EP 4 789 545 A1**
(43) Date of publication of application: **12.08.2026**
(21) Application number: 25207805.0
(22) Date of filing: 09.10.2025
(51) Int. Cl.: A23B 2/00, A23B 2/40, A23B 2/42, A23B 11/127, A23B 11/13, A23B 11/133, A23B 70/30

(54) **TEMPERATURE CONTROL SYSTEM FOR ENABLING A PASTEURISER TO PROCESS A LIQUID PRODUCT**

(30) Priority: 06.02.2025 EP 25156315
(71) Applicant: Tetra Laval Holdings & Finance S.A., 1009 Pully (CH)
(72) Inventor: Mahmoud, Mohammad, 221 86 Lund (SE); Rodriguez Arribas, Virginia, E-28500 Arganda Del Rey (ES)
(74) Representative: Tetra Pak Patent Attorneys

(57) **Abstract**

It is provided a temperature control system (2) for enabling a pasteuriser (1) to process a liquid product (8) by heating the liquid product (8) in a heating phase (50) and subsequently cooling the liquid product (8) in a cooling phase (52). The temperature control system (2) comprises: a hot water circuit (6, 6a-b) configured to circulate hot water; a cold water circuit (7, 7a-b) configured to circulate cold water; a controller (19); a heat pump (3) controllable by the controller (19) to simultaneously heat the hot water in the hot water circuit (6, 6a) and cool the cold water in the cold water circuit (7, 7a); a heating section (4) configured to transfer heat from the hot water of the hot water circuit (6, 6b) to the liquid product (8) in the heating phase (50); and a cooling section (5) configured to transfer heat from the liquid product (8) to the water of the cold water circuit (7, 7b) in the cooling phase (52).

## Description

### TECHNICAL FIELD

The present disclosure relates to the field of pasteurisers and in particular to a temperature control system for use with a pasteuriser.

### BACKGROUND

In the field of food processing, pasteurisation is a well-established method for ensuring the safety and quality of products, such as milk, juices, etc. Pasteurisation involves subjecting the product to controlled heating followed by cooling to thereby reduce microbial activity while preserving the nutritional and sensory characteristics of the liquid product. This process is widely used in the dairy, beverage, and food industries.

Modern pasteurisers often incorporate advanced thermal management systems to optimise the energy efficiency of heating and cooling operations. These systems commonly use heat exchangers to recover energy from one phase of the process and transfer it to another. Nevertheless, additional heating is required to heat the product to its pasteurisation temperature and additional cooling is required to cool the product to its safe storage temperature.

The pasteurisation process consumes significant amounts of energy and any improvement in efficiency can result in substantial energy savings.

### SUMMARY

One object is to reduce energy consumption when heating and cooling a liquid product for a pasteurisation process.

According to a first aspect, it is provided a temperature control system for enabling a pasteuriser to process a liquid product by heating the liquid product in a heating phase and subsequently cooling the liquid product in a cooling phase. The temperature control system comprises: a hot water circuit configured to circulate hot water, in liquid or gas phase; a cold water circuit configured to circulate cold water in liquid phase; a controller; a heat pump controllable by the controller to simultaneously heat the hot water in the hot water circuit and cool the cold water in the cold water circuit; a heating section configured to transfer heat from the hot water of the hot water circuit to the liquid product in the heating phase; and a cooling section configured to transfer heat from the liquid product to the water of the cold water circuit in the cooling phase.

The controller may be configured to adjust heating and cooling capacity of the heat pump such that the liquid product is cooled towards a target cold temperature in the cooling phase.

The controller may be configured to adjust heating and cooling capacity of the heat pump such that the liquid product is heated towards a target hot temperature in the heating phase.

The temperature control system may further comprise a separate cooling system configured to provide additional cooling of the cold water in the cold water circuit, when the cooling of the cold water that is provided by the heat pump is insufficient for the liquid product to reach the target cold temperature in the cooling phase.

The temperature control system may further comprise a separate heating system configured to provide additional heating of the hot water in the hot water circuit, when the heating of the hot water that is provided by the heat pump is insufficient for the liquid product to reach the target hot temperature in the heating phase.

The temperature control system may further comprise: a heat exchange assembly configured to transfer heat from the liquid product in the cooling phase to the liquid product in the heating phase.

The hot water circuit may comprise a first hot water sub-circuit and a second hot water sub-circuit. In this case, the temperature control system further comprises a hot water heat exchanger configured to transfer heat from the first hot water sub-circuit to the second hot water sub-circuit. Moreover, the heat pump is configured to heat the hot water in the first hot water sub-circuit; and the heating section is configured to transfer heat from the hot water of the hot second water sub-circuit to the liquid product in the heating phase.

The cold water circuit may comprise a first cold water sub-circuit and a second cold water sub-circuit. In this case, the temperature control system further comprises a cold water heat exchanger configured to transfer heat from the second cold water sub-circuit to the first cold water sub-circuit. Moreover, the heat pump is configured to cool the cold water in the first cold water sub-circuit; and the cooling section is configured to transfer heat from the liquid product to the cold water of the cold second water sub-circuit in the cooling phase.

According to a second aspect, it is provided a pasteuriser comprising the temperature control system according to any one of the preceding claims.

In some embodiments, the temperature control system is configured to process a continuous stream of the liquid product, wherein the liquid product continuously flows through the heating and cooling phases.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Figs 1A-B are schematic diagrams illustrating environments in which embodiments presented herein can be applied;
Fig 2 provides a detailed view of the heat pump of Fig 1 according to one embodiment;
Fig 3 is a flow chart illustrating embodiments of a method for temperature control of the liquid product, as provided by the pasteuriser of Fig 1; and
Fig 4 is a schematic diagram illustrating components of the controller of Fig 1.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

According to embodiments presented herein, a temperature control system for a pasteuriser is provided that exploits a heat pump. The heat pump is used both for heating hot water in a hot water circuit and for cooling cold water in a cold water circuit. The hot water circuit is used for heating a liquid product to a target hot temperature for pasteurisation and the cold water circuit is used for cooling the liquid product, after the pasteurisation, to a safe temperature for storage and/or distribution. The simultaneous heating and cooling is ideal for heat pump efficiency and greatly reduces energy use for the pasteurisation process. The reduced energy use saves cost and improves environmental performance.

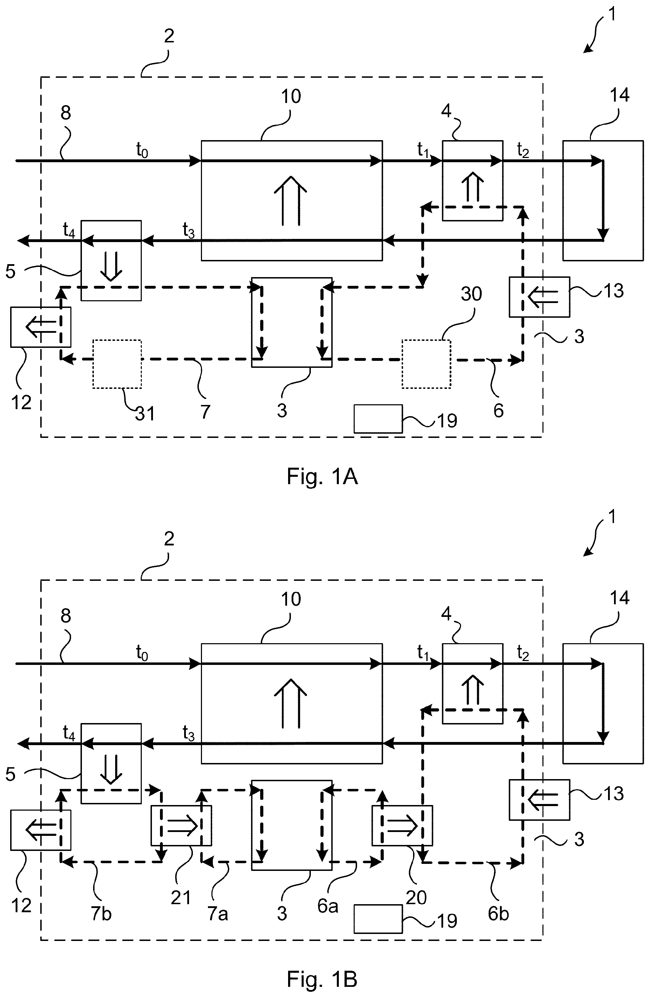

Figs 1A-B are schematic diagrams illustrating environments in which embodiments presented herein can be applied. First, embodiments illustrated by Fig 1A will be described. A temperature control system 2 is provided for enabling a pasteuriser 1 to process a liquid product 8 by heating the liquid product 8 in a heating phase for the pasteurisation, and subsequently cooling the liquid product 8 in a cooling phase to a safe storage temperature. The temperature control system 2 comprises a hot water circuit 6 and associated heating section 4, a cold water circuit 7 and associated cooling section 5, a heat pump 3, and a controller 19. The wide arrows in Fig 1A indicate heat transfer.

It is to be noted that all mentioned temperatures and temperature ranges are only to be interpreted as illustratory examples. The temperatures will vary significantly depending on the product and. Moreover, temperatures can vary depending on experiences and customisations of each installation.

The liquid product 8 enters the pasteuriser 1 at an initial temperature t₀. The initial temperature is a safe storage temperature and can e.g. be in the range between 2 and 10 °C. In this example, t₀ is 4 °C. The flow of the liquid product 8 through the pasteuriser 1 can be achieved by suitable pumps (not shown) as known in the art *per se.* The liquid product 8, initially in a heating phase, flows through a heat exchange assembly 10, which is configured to transfer heat from the liquid product 8 in the later cooling phase to the liquid product 8 in the heating phase. The heat exchange assembly 10 can e.g. be implemented as a plate heat exchanger, shell-and-tube heat exchanger, etc. This preheating step raises the product temperature to a heat exchanger heated temperature t₁, thereby reducing the energy demand on the heating section 4. The heat exchanger heated temperature t₁ depends on the pasteurisation temperature. For instance, the heat exchanger heated temperature t₁ can be in the range of 65 to 80 °C. In this example, t₁ is 71°C.

The heating section 4 is thermally connected to the hot water circuit 6, which circulates hot water that is heated by the heat pump 3. The circulation of the hot water in the hot water circuit 6 can be controlled by a separate pump (not shown). The hot water circuit 6 may be implemented with insulated piping and optionally include flow control valves or temperature sensors to allow control of the water temperature. The hot water can be in a liquid or gas phase, depending on the operational requirements. The heating section 4 transfers heat from the hot water to the liquid product 8, raising its temperature to a target hot temperature t₂ suitable for pasteurisation. The target hot temperature t₂ depends on the pasteurisation procedure that is applied. For instance, for HTST (High-Temperature Short-Time) pasteurization, the target temperature can be in the range of 72 to 75 °C. In this example, the target hot temperature t2 is 75 °C.

A holding cell 14 ensures the liquid product remains at the target hot temperature t2 for a prescribed time period to achieve desired pasteurisation effect on the liquid product 8. This can be achieved by providing a piping length in the holding cell 14 for the liquid product 8 that is calculated based on the flow rate of the liquid product 8 through the pasteuriser 1, to hold the liquid product 8 at the target hot temperature t₂ for the prescribed time. In this example, the prescribed time is between 15 and 20 seconds.

After the pasteurisation for the prescribed time period in the holding cell 14, the liquid product 8 enters the cooling phase. As mentioned above, the exchange assembly 10 is provided to transfer heat from liquid product 8 in its cooling phase (cooling from a hot temperature) to the liquid product 8 in its heating phase (heating from a cold temperature). The hot liquid product 8 enters the exchange assembly 10 when the liquid product 8 is at the target hot temperature t₂ and the cold liquid product 8 enters the exchange assembly 10 when the liquid product 8 is at the initial cold temperature t₀. This achieves the maximum temperature difference between the liquid product 8 in the two processing phases in the exchange assembly 10, which ensures efficiency of the heat transfer in the exchange assembly 10. After the exchange assembly 10 in the cooling phase, the temperature of the liquid product 8 is at a heat exchanger cooled temperature t₃. Again, the heat exchanger cooled temperature t₃ depends on the pasteurisation temperature. For instance, the heat exchanger cooled temperature t₃ can be in the range of 5 to 15 °C. In this example, t₃ is 9°C.

In the cooling phase, after the exchange assembly 10, the liquid product 8 enters the cooling section 5 to reduce the temperature of the liquid product 8 to a target cold temperature t₄, suitable for safe storage. The target cold temperature t₄ is a safe storage temperature for the liquid product 8 and can e.g. be in the range between 2 and 10 °C. In this example, t₄ is 4 °C. The cooling section 5 is thermally connected to the cold water circuit 7, which circulates cold water that is cooled by the heat pump 3. The cold water circuit 7 can be implemented as a closed-loop circuit with a chiller or a reservoir to enhance cooling capacity. For reasons of clarity of the drawing, any pumps of the cold water circuit 7 are not shown. The cooling section 5 transfers heat from the liquid product 8 to the cold water, to thereby reduce the temperature of the liquid product 8 to the target cold temperature t₄. It is to be noted that the water in the cold water circuit 7 can vary between installations, e.g. depending on the target cold temperature t₄. For instance, the cold water circuit 7 can circulate ice water or glycol water, etc.

The temperature control system 2 may further include a separate cooling system 12, such as a chiller or an ice water generator, to provide additional cooling in the cold water circuit 7 when the heat pump 3 alone is insufficient. Hence, the separate cooling system 12 can be activated based on measurements of the temperature of the liquid product 8 after the cooling section 5. If the heat pump is running at its maximum operational capacity and the measured temperature is still greater than desired, the separate cooling system 12 is activated.

Similarly, a separate heating system 13, such as a boiler, steam generator or electric heater, may be included to provide additional heating of the hot water in the hot water circuit 6 if required. Hence, the separate heating system 13 can be activated based on measurements of the temperature of the liquid product 8 after the heating section 4. If the heat pump is running at its maximum operational capacity and the measured temperature is still less than desired, the separate heating system 13 is activated.

Temperature sensors are provided to measure temperature t₀, t₁, t₂, t₃ and t₄ of the liquid product 8, as shown in Fig 1A, at various stages of the pasteurisation process. Additionally, temperature sensors can be provided to measure the temperature of the cold water in the cold water circuit 7, and to measure the temperature of the hot water in the hot water circuit 6. All temperature sensors can provide their measurements to the controller 19.

Optionally, a hot water buffer tank 30 is provided in the hot water circuit 6. The hot water tank 30 increases the amount of water in the hot water circuit 6, to thereby increase thermal inertia and thermal stability of the hot water circuit 6. Analogously, a cold water buffer tank 31 is optionally provided in the cold water circuit 7 to increase thermal inertia and thermal stability of the cold water circuit 7.

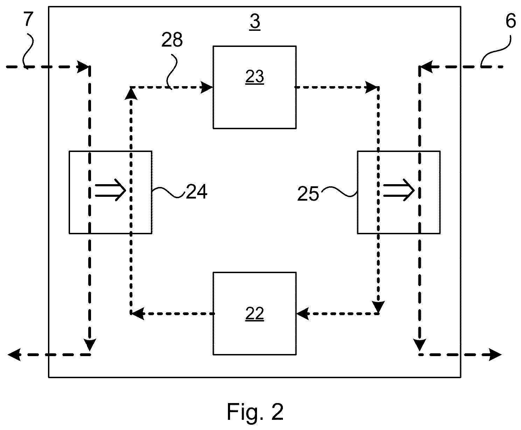

The controller 19 can, on its output, control the operation of the heat pump 3. For instance, a compressor (see Fig 2 and text below) can be controlled by the controller 19 to reduce the heat pump operation to less than its maximum capacity, e.g. by controlling a variable speed compressor to reduce its speed or by controlling a duty cycle of the compressor. The duty cycle implies that the compressor is switched on and off to thereby control the heat pump 3 to achieve a desired fraction of its maximum capacity. Similarly, when the compressor is a variable speed compressor, its speed can be controlled to thereby control the heat pump 3 to achieve a desired fraction of its maximum capacity.

It is to be noted that, in the heat pump 3, the heating and cooling might not be separately controllable, unless excess cooling/heating is discarded.

In one embodiment, the controller 19 can has the cold water circuit as its target control. In this case, the controller 19 is configured to adjust heating and cooling capacity of the heat pump 3 such that the liquid product 8 is cooled towards the target cold temperature t4 in the cooling phase. When the energy required for cooling is smaller than the energy required for heating, the heat pump 3 can then be dimensioned such that very little, or even no, cooling is needed from the separate cooling system 12. The separate heating system 13 is then employed to achieve the desired target hot temperature t₂ in the heating phase.

Alternatively, the controller has the hot water circuit as its target control. In this case, the controller 19 is configured to adjust heating and cooling capacity of the heat pump 3 such that the liquid product 8 is heated towards a target hot temperature in the heating phase 50.

The controller 19 can control the separate cooling system 12 to provide additional cooling of the cold water in the cold water circuit 7. This can be needed when the cooling of the cold water that is provided by the heat pump 3 is insufficient for the liquid product 8 to reach the target cold temperature t₄ in the cooling phase.

Additionally or alternatively, when needed, the controller can control the separate heating system 13 to provide additional heating of the hot water in the hot water circuit 6. This can be needed when the heating of the hot water that is provided by the heat pump 3 is insufficient for the liquid product 8 to reach the target hot temperature t₂ in the heating phase.

Even if the heat pump 3 does not provide sufficient cooling of the cold water circuit 7 and/or sufficient heating of the hot water circuit 6, the heat pump is more efficient in heating and cooling than the separate cooling system 12 and the separate heating system 13. Consequently, any reduction in the use of the separate cooling system 12 and/or the separate heating system 13 caused by exploiting the heat pump 3 will result in reduced energy use for the pasteuriser 1.

Looking now to Fig 1B, the differences compared to Fig 1A will be described. In Fig 1B, the hot water circuit 6a-b is split into a first hot water sub-circuit 6a and a second hot water sub-circuit 6b. The temperature control system 2 further comprises a hot water heat exchanger 20 configured to transfer heat from the first hot water sub-circuit 6a to the second hot water sub-circuit 6b. The heat pump 3 is configured to heat the hot water in the first hot water sub-circuit 6a and the heating section 4 is configured to transfer heat from the hot water of the hot second water sub-circuit 6b to the liquid product 8 in the heating phase 50.

Analogously on the cold water side, the cold water circuit 7a-b is split into a first cold water sub-circuit 7a and a second cold water sub-circuit 7b. The temperature control system 2 here further comprises a cold water heat exchanger 21 configured to transfer heat from the second cold water sub-circuit 7b to the first cold water sub-circuit 7a. The heat pump 3 is configured to cool the cold water in the first cold water sub-circuit 7a and the cooling section 5 is configured to transfer heat from the liquid product 8 to the cold water of the cold second water sub-circuit 7b in the cooling phase 52.

By splitting the hot water circuit and the cold water circuit in two, the second hot water sub-circuit 6b can a legacy hot water circuit and the second cold water sub-circuit 7b can be a legacy cold water circuit. Embodiments presented herein then introduce the first hot water sub-circuit 6a, the first cold water sub-circuit 7a, and associated heat exchangers 20, 21, as well as the heat pump 3 and the controller 19, to exploit the heat pump efficiencies. This structure simplifies installation, since the only changes needed on installation to existing structures is to connect the second hot water sub-circuit 6b (the legacy hot water circuit) to the hot water heat exchanger 20 and the second cold water sub-circuit 7b (the legacy cold water circuit) to the cold water heat exchanger 21.

Fig 2 provides a detailed view of the heat pump 3 of Figs 1A-B according to one embodiment. The heat pump 3 is configured to simultaneously heat the hot water in the hot water circuit 6 and cool the cold water in the cold water circuit 7, based on a refrigerant being circulated internally in the heat pump 3 in a heat pump circuit 28. The refrigerant can be any refrigerant usable in a heat pump, and can be e.g. ammonia, carbon dioxide, isobutane, etc. By keeping the heat pump circuit 28 internally in the heat pump 3 , and using the water to transfer heat in the hot water circuit 6 and the cold water circuit 7, the refrigerant of the heat pump 3 can be kept only internally in the heat pump 3. Hence, the refrigerant, which may be toxic or otherwise undesired, does not need to be piped throughout the pasteuriser 1. Instead, water is used to transfer the heating and cooling effects of the heat pump, where water is much safer and otherwise desirable to be piped throughout the pasteuriser 1. Furthermore, by using water for heat transfer, integration at an existing site is easier, i.e. simplifying retrofitting of the heat pump solution.

The heat pump 3 comprises a compressor 23, a condenser 25, an expansion valve 22, and an evaporator 24. It is to be noted that the direction of movement of cold water, hot water and refrigerant shown in Fig 2 is only an example to be consistent with Figs 1A-B and to make the diagrams easier to follow and less complex purely in terms of drawing. For instance, the flow of refrigerant can be provided such that it flows in the opposite direction to the hot water in the hot water circuit 6 as well as in the opposite direction to the cold water in the cold water circuit 7.

The cold water circuit 7 provides cold water for further cooling to the evaporator 24, where the refrigerant absorbs heat from the cold water. The evaporator 24 may be implemented as a finned coil heat exchanger or a brazed plate heat exchanger for enhanced heat transfer. As a result, the refrigerant undergoes a phase change from a liquid to a vapour, reducing the temperature of the cold water further. Subsequently, the cold water is recirculated to the cooling section 5 for use in the cooling phase.

The refrigerant vapour flows from the evaporator 24 to the compressor 23, where it is compressed to a higher pressure and temperature. The compressor 23 can be implemented as a scroll compressor, reciprocating compressor, or screw compressor, depending on the system size, efficiency requirements and budget. In the heat pump circuit 28 after the compressor 23, the high-pressure refrigerant vapour is routed to the condenser 25, which is thermally connected to the hot water circuit 6. The condenser 25 releases heat to the hot water of the hot water circuit 6, to increase the temperature of the hot water further, for circulation to the heating section 4 for the heating phase.

After releasing heat in the condenser 25, the refrigerant transitions back into a liquid state and flows through the expansion valve 22, where its pressure and temperature are reduced. The expansion valve 22 can be implemented as a thermostatic expansion valve, an electronic expansion valve, or a capillary tube, depending on the control precision required. This prepares the refrigerant to re-enter the evaporator 24 and repeat the cycle.

The heat pump 3 is controlled by the controller 19, which dynamically adjusts the operation of the compressor 23 and other components to balance the thermal loads of the hot water circuit 6 and/or the cold water circuit 7, as described with reference to Fig 1A-B above.

It is to be noted that the description of the heat pump 3 of Fig 2 is an overview description of components of the heat pump 3 and its function. When implemented, the heat pump can be more complex, and may e.g. comprise multiple compressors, etc.

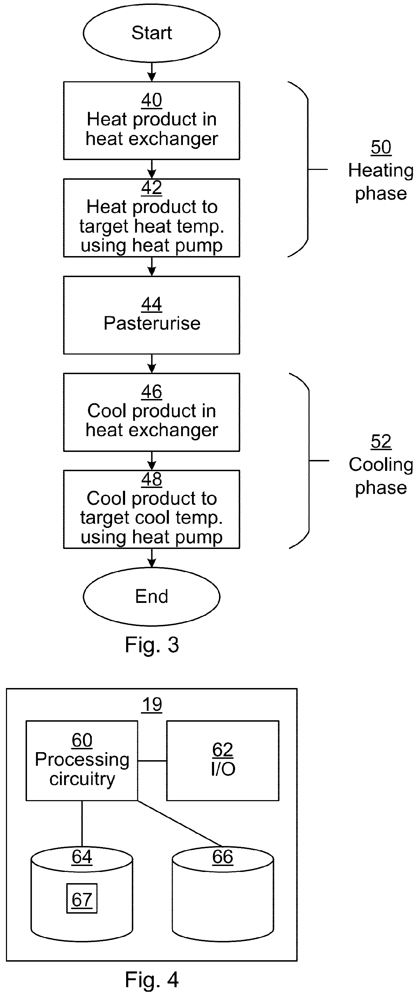

Fig 3 is a flow chart illustrating embodiments of a method for temperature control of the liquid product, as provided by the pasteuriser of Figs 1A-B.

In a *heat product* in *heat exchanger* step 40, the liquid product 8 is heated from its initial temperature t₀, to the heat exchanger heated temperature t₁.

In a *heat product to target heat temp (temperature) using heat pump* step 42, the liquid product 8 is heated further so that the liquid product 8 reaches the target hot temperature t₂ for the pasteurisation. This is achieved by the liquid product 8 absorbing heat from the hot water of the hot water circuit 6.

The *heat product in heat exchanger* step 40 and the *heat product to target heat temperature using heat pump* step 42 make up the heating phase 50.

In a *pasteurise* step 44, the liquid product 8 is kept at the target hot temperature t₂ for a prescribed time period for the desired pasteurisation. This is achieved by the appropriately configured holding cell 14, as described above.

In a *cool product in heat exchanger* step 46, the liquid product 8 is cooled from the target hot temperature t₂ (or close thereto), to an exchanger cooled temperature t₃.

In a *cool product to target cool temperature using heat pump* step 48, the liquid product 8 is cooled further so that the liquid product 8 reaches the target cold temperature t₄, for safe storage and/or distribution. This is achieved by the liquid product 8 transferring heat to the cold water of the cold water circuit 7.

The *cool product in heat exchanger* step 46a and the *cool product to target cool temperature using heat pump* step 48 make up the cooling phase 52.

Fig 4 is a schematic diagram illustrating components of the controller 19 of Figs 1A-B. Processing circuitry 60 is provided using any combination of one or more of a suitable central processing unit (CPU), graphics processing unit (GPU), microcontroller unit (MCU), multiprocessor, neural processing unit (NPU), microcontroller, digital signal processor (DSP), etc., capable of executing software instructions 67 stored in memory circuitry 64. The processing circuitry 60 could alternatively be implemented using an application specific integrated circuit (ASIC), field programmable gate array (FPGA), etc. The processing circuitry 60 can be configured to control the heat pump 3 as described above.

The memory circuitry 64 can be any combination of random-access memory (RAM) and/or read-only memory (ROM). The memory circuitry 64 also comprises non-transitory persistent storage, which, for example, can be any single one or combination of magnetic memory, optical memory, solid-state memory or even remotely mounted memory.

A data memory 66 is also provided for reading and/or storing data during execution of software instructions in the processing circuitry 60. The data memory 66 can be any combination of RAM and/or ROM.

The controller 19 further comprises an I/O interface 62 for communicating with external and/or internal entities, such as the heat pump 3, temperature sensors, the separate cooling system 12, the separate heating system 13, etc.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A temperature control system (2) for enabling a pasteuriser (1) to process a liquid product (8) by heating the liquid product (8) in a heating phase (50) and subsequently cooling the liquid product (8) in a cooling phase (52), the temperature control system (2) comprising:
a hot water circuit (6, 6a-b) configured to circulate hot water, in liquid or gas phase;
a cold water circuit (7, 7a-b) configured to circulate cold water in liquid phase;
a controller (19);
a heat pump (3) controllable by the controller (19) to simultaneously heat the hot water in the hot water circuit (6, 6a) and cool the cold water in the cold water circuit (7, 7a);
a heating section (4) configured to transfer heat from the hot water of the hot water circuit (6, 6b) to the liquid product (8) in the heating phase (50); and
a cooling section (5) configured to transfer heat from the liquid product (8) to the water of the cold water circuit (7, 7b) in the cooling phase (52).

2. The temperature control system (2) according to claim 1, wherein the controller (19) is configured to adjust heating and cooling capacity of the heat pump (3) such that the liquid product (8) is cooled towards a target cold temperature in the cooling phase (52).

3. The temperature control system (2) according to claim 1, wherein the controller (19) is configured to adjust heating and cooling capacity of the heat pump (3) such that the liquid product (8) is heated towards a target hot temperature in the heating phase (50).

4. The temperature control system (2) according to any one of the preceding claims, further comprising a separate cooling system (12) configured to provide additional cooling of the cold water in the cold water circuit (7, 7a-b), when the cooling of the cold water that is provided by the heat pump (3) is insufficient for the liquid product (8) to reach the target cold temperature in the cooling phase (52).

5. The temperature control system (2) according to any one of the preceding claims, further comprising a separate heating system (13) configured to provide additional heating of the hot water in the hot water circuit (6, 6b), when the heating of the hot water that is provided by the heat pump (3) is insufficient for the liquid product (8) to reach the target hot temperature in the heating phase (50).

6. The temperature control system (2) according to any one of the preceding claims, further comprising:
a heat exchange assembly (10) configured to transfer heat from the liquid product (8) in the cooling phase (52) to the liquid product (8) in the heating phase (50).

7. The temperature control system (2) according to any one of the preceding claims,
wherein the hot water circuit (6a-b) comprises a first hot water sub-circuit (6a) and a second hot water sub-circuit (6b);
the temperature control system (2) further comprises a hot water heat exchanger (20) configured to transfer heat from the first hot water sub-circuit (6a) to the second hot water sub-circuit (6b);
the heat pump (3) is configured to heat the hot water in the first hot water sub-circuit (6a);
the heating section (4) is configured to transfer heat from the hot water of the hot second water sub-circuit (6b) to the liquid product (8) in the heating phase (50).

8. The temperature control system (2) according to any one of the preceding claims,
wherein the cold water circuit (7a-b) comprises a first cold water sub-circuit (7a) and a second cold water sub-circuit (7b);
the temperature control system (2) further comprises a cold water heat exchanger (21) configured to transfer heat from the second cold water sub-circuit (7b) to the first cold water sub-circuit (7a);
the heat pump (3) is configured to cool the cold water in the first cold water sub-circuit (7a);
the cooling section (5) is configured to transfer heat from the liquid product (8) to the cold water of the cold second water sub-circuit (7b) in the cooling phase (52).

9. A pasteuriser (1) comprising the temperature control system according to any one of the preceding claims.
